# EUROPEAN PATENT SPECIFICATION

(11) **EP 1 601 883 B1**
(45) Date of publication and mention of the grant of the patent: **12.12.2007**
(21) Application number: 03815945.5
(22) Date of filing: 20.02.2003
(51) Int. Cl.: F16B 33/02, F16B 25/00

(54) **SELF-TAPPING SCREW FOR USE IN LOW DUCTILE MATERIALS**
SCHNEIDSCHRAUBE FÜR DIE VERWENDUNG IN GERING DEHNBAREN MATERIALIEN
VIS AUTO-TARAUDEUSE UTILISABLE AVEC DES MATERIAUX PEU DUCTILES

(43) Date of publication of application: 07.12.2005
(73) Proprietor: Conti Fasteners AG, 6340 Baar (CH)
(72) Inventor: SCHWARZ, Manfred, 74670 Forchtenberg-Ernsbach (DE)
(74) Representative: Fritsche, Rainer
(86) International application number: PCT/EP2003/001758
(87) International publication number: WO 2004/074698

(56) References cited:
- EP-A- 0 080 872
- GB-A- 1 392 513
- GB-A- 2 104 997
- US-A- 5 722 808
- US-B1- 6 494 655

## Description

### FIELD OF THE INVENTION

The present invention relates to a thread, in particular for a self-tapping screw or nut, respectively, according to claim 1 and a respective screw as well as a respective nut for a fastener system according to claims 14 and 20.

In detail, the invention is directed to a novel and enhanced thread form construction having in particular a non-triangular or non-trapezoidal, respectively, thread profile each thread having flank faces which are a leading thread face and a trailing thread face wherein at least one of said leading and trailing thread faces is provided with a convex curvature having a first radius. Such a thread profile is disclosed in US-A-5 722 808.

In more detail, the invention relates to an improved thread construction for a thread forming fastener device comprising either external or internal threads providing for enhanced distribution of internal forces generated in the mating component or anchor material, respectively, which contains the complementary formed external or internal threads formed by the thread forming fastener device. Such fastener device can be used to enhance the performance of a jointed structure that comprises of a anchor material that can be classified in particular as having low ductility and a self-tapping screw in accordance with the embodiment of the invention.

### BACKGROUND OF THE INVENTION

It is recognized by those skilled in the art that conventional self-tapping or thread-rolling screws, of the thread forming type, when used to generate a mating internal thread, in low ductile materials, will have limited reliability in assembly and service.

As to known threaded fastener technology, the configuration of an external threaded fastener is particularly arranged for generating the complementary internal threads by material displacement. In short and by way of example, when inserting such an external threaded fastener into a plain bore pilot hole and applying rotation between the externally threaded fastener and the component, which contains the plain bore pilot hole the internal thread is cold formed or swaged into the surface of the plain bore pilot hole of the component. Thus, a nominal axial force in the direction that the external fastener is moved, is diverted towards the surface of the plain bore pilot hole of the component. Desirably, no component material should be cut or removed from the component by the cold forming of the internal threads. For that reason, when materials having low ductility are to be assembled by means of such thread forming fastener material flow in direction to the fastener axis should be avoided.

Further, commonly known thread form geometries are of a triangular or trapezoidal cross-section that has an included thread flank angle of 60° or less. Using such thread form geometries to produce, by self-tapping or thread-rolling, respectively, thread forming means, a mating internal thread, in low ductile anchor materials, of the magnesium alloy type or equivalent, is known to effect the structural integrity of the mating threads.

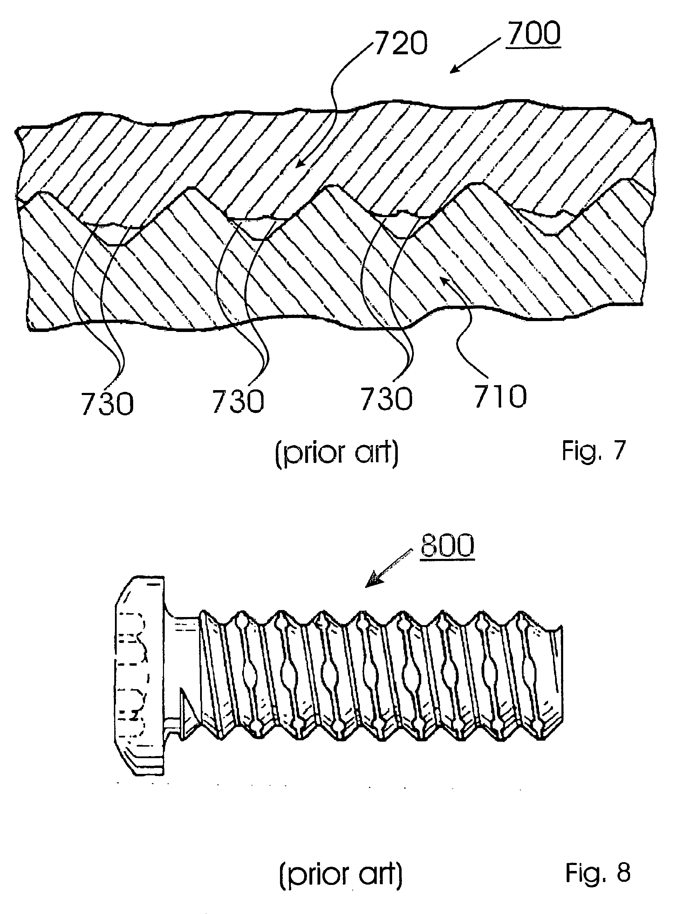

In particular, the internal thread that is generated in the anchor material can be seen to suffer from galling, eruption of the layers of the anchor material and the creation of chips and slivers that are detrimental to the assembly. Portions of the anchor material, adjacent to the screw entry end of the plain pilot-hole, will be seen to crumble and tear. These effects are illustrated in Fig. 7, which shows, in detail, a prior art jointed structure 700. A screw 710 having a known thread construction geometry is mating with a anchor material 720 assumed to have a low ductility. As can be seen due to the forces which are introduced by the screw 710 into the anchor material 720, anchor material flows downwards the thread flanks building up eruptions 730. These eruptions 720 of the low ductile anchor material 720 will crumble and tear, especially, in connections which are several times or periodically, respectively, unfastened during period of use, e.g. for purpose of service. Thus, chips and slivers are created.

Furthermore, where the plain bore hole is of the form generally considered as a 'through hole', such that the hole enters a cavity in the anchor casting, such a cavity being for the purpose of containing oil or other like liquids, or where the plain hole impinges in a zone containing electronic equipment, unit assembly malfunctions can occur together with a probability of lethal damage to the assembled unit.

It is further recognized, by those skilled in the art, that these detrimental features are caused by the stresses and strains that are induced into the anchor material when the self-tapping screw is applied by rotational movement that develops axial movement of the screw relative to the anchor pilot hole.

The foregoing described thread-rolling screw as an example for generating complementary mating threads by material displacement can also easy be applied to a thread-rolling nut that is to be screwed on a plain bolt.

European patent 0 553 907 discloses a thread forming screw 800, which is depicted in Fig. 8, for cold forming internal threads in a work-piece comprised of a low ductility material, such as magnesium and the like. The screw uses primarily compressive forces to form the internal threads in the work-piece. The screw has a shank having an entering end and a head end. External threads are disposed on the shank. The external threads define a thread configuration with an angle measuring substantially within the range of 90° to 120°. In this configuration, there is developed a predominately compression of the low-density anchor material during the formation of the internal thread during the self-tapping operation. Whilst such a move toward an increased thread profile angle, (beyond that of 60°), will enhance the load carrying capabilities of the assembled mating threads, it does not eliminate the problems associated with slivers and material crumbling that can contaminate the assembly.

### OBJECTIVE AND SUMMARY OF THE INVENTION

It is therefore an objective of the present invention to provide a thread for a thread forming threaded fastener which provides force distribution into the material of a anchor component to which the fastener is fastened such that cutting or removing material from the anchor component by the cold forming of the internal or external threads is avoided to the greatest possible extent.

It is a further objective of the invention to provide a threaded fastener system whereby the novel thread profile geometry, on the screw, will develop, by self-tapping principles, a mating thread construction that will not only provide for enhanced assembly characteristics, over alternately known systems, but will lead toward reduction and/or elimination of chips, slivers and other debris that is evident when thread forming an internal, mating, thread in components consisting of low ductile anchor materials of magnesium alloys and the like.

Accordingly, a thread having a non-triangular thread profile with leading and trailing thread faces wherein at least one of said leading and trailing thread faces is provided with a convex curvature having a first radius, has a tip of said non-triangular thread profile having also a convex curvature with a second radius wherein the value of the first radius is different from the value of the second radius.

Preferably, the first radius is larger than the second radius. Such a thread can be used in a thread-rolling screw or nut, in particular for materials having a low ductility, e.g. magnesium or an alloy composed thereof.

The base or root, respectively, between two subsequent non-triangular thread profiles has a concave curvature with a third radius. Thus, notch effects or stress concentrations are reduced such that the screw or nut, respectively, being provided with the thread according to the invention can be loaded with a higher stress compared to a known screw or nut, respectively, having corresponding dimensions.

Preferably, the value of the third radius is smaller than the value of the first radius and preferably smaller than the value of the second radius.

Further, the transition from the at least one of the leading and trailing thread faces being provided with a convex curvature and the tip of the non-triangular thread profile is continuous. Advantageously, by the configuration of the inventive thread forces are introduced into the mating component with a greater force component perpendicular to the mating component than conventional threads. Thus, there are mainly compression forces affecting the mating material and less shearing forces during formation of the complementary thread into the mating material when the threaded fastener according to the invention fastened. Since the compressive strength of the low ductile material is greater than the shear strength, such materials can accept compressive forces more readily, and with less destructive effects, than a shearing force. Furthermore, the transition from the at least one of the leading and trailing thread faces being provided with a convex curvature and the base or bottom, respectively, between two consequent non-triangular thread profiles is continuous.

In a first embodiment of the inventive thread, the leading and the trailing thread faces of a non-triangular thread profile are shaped symmetrically to each other. In other embodiments in particular relating to materials with a better ductility, it is also possible that the leading and trailing thread faces of the non-triangular thread profiles are asymmetrically to each other. In the asymmetrical case, it is also possible to have one flat or even concave thread face, at least partially, with respect to application needs.

As to the characteristics of a thread according to the invention, the pitch of the thread ranges preferably between 0.15 to 0.5 times the nominal diameter of the thread. In the case of a lobular cross-section screw read diameter as being the circumscribing circle of the lobular section.

According to that preferred range for the pitch of the thread further parameters defining a thread for a screw or a nut according to the invention can be derived as follows:
- the first radius of the thread profile is preferably between 0.8 to 1.2 times the pitch of the thread;
- the depth of the thread profile is between 0.4 to 0.65 times the pitch of the thread;
- the second radius of the thread profiles corresponds substantially to 0.1 times the pitch of the thread;
- the third radius of the thread profile corresponds substantially to 0.08 times the pitch of the thread.

By applying the teaching of the present invention to a respective thread-rolling screw or a thread-rolling nut, a screw and a nut for a threaded fastener system are provided. In such threaded fastener system the screw or nut, respectively, include a non-triangular external or internal thread, respectively, being designed according to the present invention.

The screw of such fastener system comprises an external thread according to the invention and has a circular cross-sectional area or cross-section, respectively. On the other hand, the respective nut has an internal thread with a circular cross-sectional area. However, it is also possible that the threads of the screw have a non-circular, preferably a lobular cross-section, which is most preferably a trilobular cross-section. Due to the lobular cross-section design, there is a higher vibration resistance after having threaded the screw, respectively, being provided with the thread according to the invention into or onto the mating component.

For better handling in use during assembly the screw may have a pilot section at the point of the screw for supporting easier insertion of the screw into a plain bore pilot hole of the component where the screw has to be screwed in. The length of the pilot section is preferably 2.0 times the pitch of the thread of the screw.

In summary, the inventive nature of the screw thread profile provides for said profile to be preferably of non-triangular and/or non-trapezoidal form and to be of a defined and constructed arcuate form developed from at least two defined radii that are in accordance with the present invention. In combination the at least two radii provide for the assembly conditions in accordance with the objective of the invention to be achieved.

### BRIEF DESCRITION OF THE DRAWINGS

The above and other objectives, features and advantages of the present invention will become more clear from the following description of one preferred embodiment thereof, taken in conjunction with the accompanying drawings. It should be noted that in the drawings reference numerals denote in the most significant digit the number of the respective figure. All drawings are intended to illustrate some aspects and embodiments of the present invention. Moreover, it should be noted that in case of different embodiments only differences are described in detail. It goes without saying that not all alternatives and options are shown and therefore, the present invention is not to be considered limited by the content of the accompanying drawings.

In the following, the present invention will be described in greater detail by way of example with reference to the accompanying drawings, in which
- Fig. 1: is a schematic of a self-tapping screw having a thread according to the embodiment of the present invention;
- Fig. 2: is a schematic cross-section of the body of the screw showing the preferred lobular section of the screw in accordance with Fig. 1;
- Fig. 3: illustrates an enlarged view of a segment from the thread profile of the screw in Fig. 1;
- Fig. 4: is a detailed schematic of one thread of the screw in Fig. 1 and the profile segment in Fig. 3, wherein particular design parameters are depicted;
- Fig. 5: is a schematic demonstrating the effect of the thread profile according to the present invention and in respect of the resultant nominal forces that are diverted into the mating component material and where the thread profile is symmetrical about a line perpendicular to the centre axis of the screw;
- Fig. 6: is a schematic demonstrating the effect of the thread profile in accordance with the present invention and in respect to the resultant nominal forces that are diverted into the mating component material and where the thread profile is asymmetrical about a line that is perpendicular to the centre axis of the screw;
- Fig. 7: is the prior art schematic that demonstrated the problems encountered with trapezoidal threads of known configuration; and
- Fig. 8: is a prior art schematic of the thread profile in accordance with European patent 0 553 907 and depicts the continuing problem associated with chips, slivers and debris etc.

### DETAILED DESCRIPTION OF THE PREFERRED EMBODIMENT

While the invention may be susceptible to embodiments in different forms, there is shown in the drawings and described in detail, specific embodiments with the understanding that the present disclosure is to be considered an exemplification of the principles of the invention and that it is not intended to limit the invention to that which is illustrated and described herein.

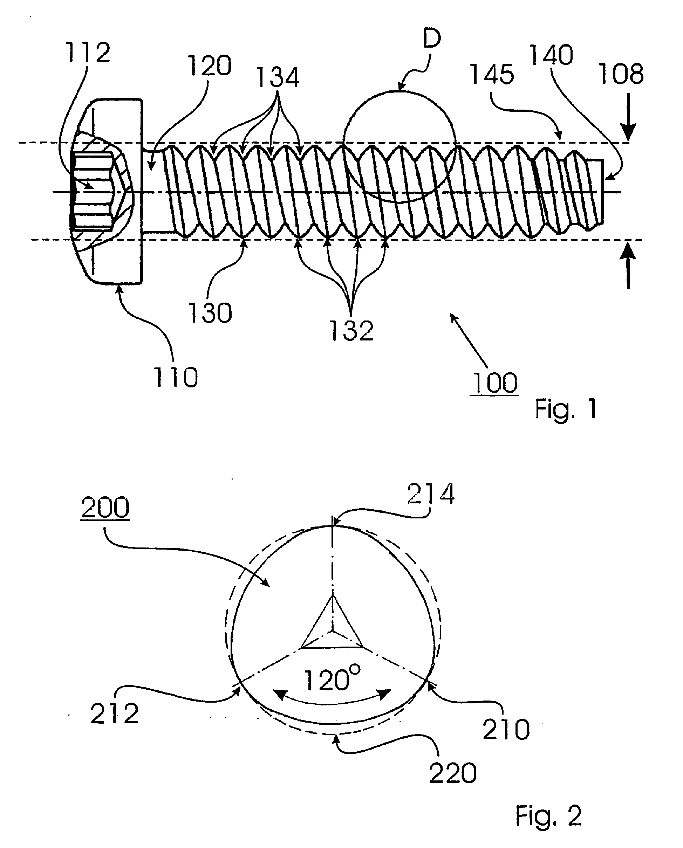

Accordingly, with reference to Fig. 1 there is shown a schematic side elevation view of a thread-rolling screw 100 having a thread according to an embodiment of the present invention. The screw comprises a head 110 in which there is included a recess 112 that when said recess is engaged with an appropriate matching, driving tool, there can, via the driving tool, be imparted a rotational movement about the axis of the screw 109. This rotational movement, in association with the helical scroll, as referenced below, provides the means by which the screw is driven into the plain bore pilot hole in the mating anchor material. (Not shown). The drive means used to impart rotational movement to the screw is not limited to a recess drive system. External drive systems would also be seen as appropriate.

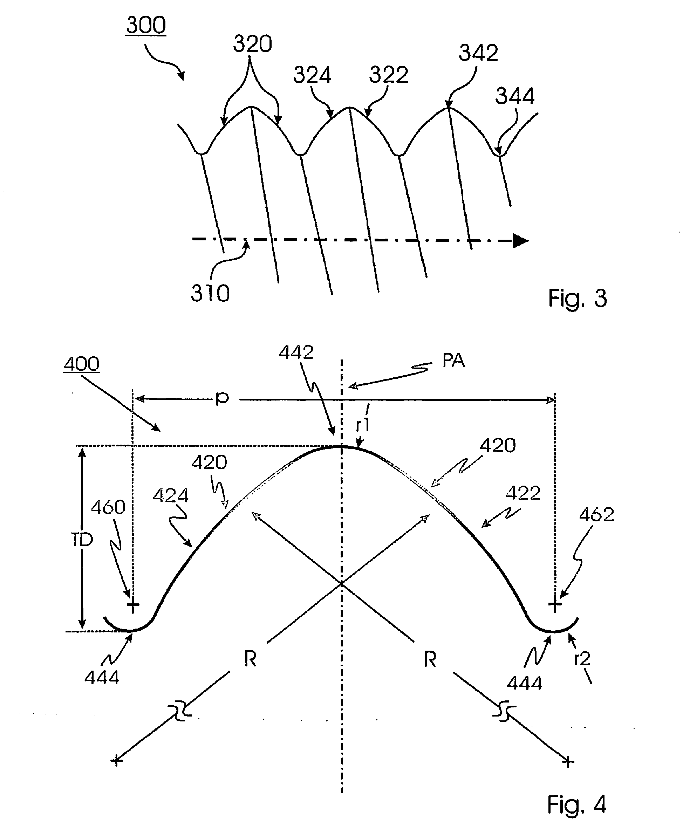

Adjacent to the underside of the head of the screw and along the length of the screw, there is provided a screw body 120 on which is included a helical scroll or screw thread 130. Said scroll or screw thread is constructed such that the profile of the scroll has a geometry in accordance with the present invention and as described in detail further below and in respect of Fig. 3 together with the enlarged view of a part of the thread profile 130 contained within the circle D of Fig. 1.

The thread entry zone, being that which is the farthest removed from the head of the screw and designated 140, is provided with a piloting point for easy insertion and hole finding facility during the initial application of the screw. This piloting point encompasses in this particular embodiment two thread pitches 145. Thread pitch in this example being the distance between a selected point of one of the threads and the same point on an adjacent thread.

The screw thread pitch, according to the embodiment of the present invention, is chosen to lie between 0.15 and 0.5 times the screw nominal outside diameter 108.

In other words, adjacent to the head 110, there follows a shank 120 which provides the enhanced thread profile 130 according to the present invention which will be described in more detail herein further below with respect to Fig. 3 together with the enlarged view of a part of the thread profile 130 contained within the circle D of Fig. 1. The thread profile 130 comprises thread tips 132 and thread base or roots 134, respectively. The screw 100 of Fig. 1 has on the opposite side of the head 110 a pilot end 140, which is adapted for easy insertion into a respective bore pilot hole of the respective application, which is not shown in Fig. 1. The pilot end 140 of the screw 100 comprises in this embodiment two turns or convolutions of the thread profile 130 corresponding to the length of two pitches of the screw 100, wherein the pitch is defined by the distance of two subsequent thread tips 132 or two subsequent thread roots 134, respectively. According to the invention, the dimension of the pitch of the thread is chosen from the range between 0.15 to 0.5 times the nominal diameter of the thread. The construction of the screw 100 having the thread configuration or profile 130 according to the present invention may have a lobular cross-section or any other form that is seen to be applicable for efficient forming of the internal thread during the assembly of the externally threaded screw 100. The outline of a typical lobular cross-section screw having lobes is shown in top view in Fig. 2.

Fig. 2 is a schematic that shows a lobular form where there are three lobes 210, 212, 214 that are equally spaced around the periphery of the section. The number of lobes is not restricted to three as any odd number of lobes would be applicable for the purpose of supporting the objective of the fastener as and when used into magnesium alloy and other low ductile materials.

The benefits of the lobular cross-section construction, for thread forming, self-tapping screws, are clearly defined in the teachings of Phippard, jr. US Patent 3,195,156, and subsequent international filings. For instance, advantageously, the trilobular cross-section provides for better resistance against vibrations occurring in some applications, e.g. in automotive assembly, which have effect on the screw connection to become unscrewed.

In other words, Fig. 2 illustrates a schematic plan view of the cross-section 200 of the screw 100 of Fig. 1 being a lobular cross-section.

From the cross-section 200 can clearly be seen that the screw 100 of Fig. 1 has three lobes 210, 212, 214 which are arranged substantially such that there is an angle of 120° between respective two lobes. With respect to the number of lobes, screws having the shown cross-section are also known as trilobular screws. The broken circle 220 corresponds to the respective circumference of the trilobular cross-section. Advantageously, the trilobular cross-section provides for better resistance against vibrations occurring in some applications, e.g. in automotive assembly, which have effect on the screw connection to become unscrewed.

As to Fig. 3, there the thread profile 300 of the screw 100 in Fig. 1 is shown in greater detail, which is depicted by the circle D in Fig. 1. There is a dashed line 310 corresponding to the symmetrical axis of the screw. Again, in Fig. 3 the enhanced thread profile 300 for use of the screw in materials having a low ductility can clearly be recognized. There are thread tips 342 and thread roots 344 which are connected by symmetrical thread faces 320 of the first embodiment of a screw according to the present invention. With respect to the moving direction, being depicted in Fig. 3 by the arrow tip at one end of the dashed line 310, when the screw is inserted into a plain bore pilot hole, the thread face directed into the moving direction is a leading thread face 322 and the opposite thread face is a trailing thread face 324. It should be noted, as herein below will be described together with a further embodiment that the invention is not restricted to a symmetrical construction of the thread faces 320.

In Fig. 4, there is shown an enlarged cross-sectional view of one screw thread 400 of an external screw thread profile that is constructed according to the present invention, i.e. screw thread 400 corresponds to the thread profile 130 of the screw 100 in Fig. 1. The cross-section of the screw thread 400 is taken through two neighboring thread turns or convolutions, respectively, of the screw thread 400 formed on the outside of the screw. The thread pitch p is denoted as the distance between centers 460 and 462 of neighboring thread convolutions which is equivalent to the pitch definition as outlined above in conjunction with two subsequent thread tips. The depth of the thread TD is made between 0.4 to 0.65 times the pitch p of the thread.

The thread profile of the screw thread 400 is developed from radii R that are designed such that the thread profile is symmetrical to the imaginary symmetry axis PA. The value of the radii R being the first radius of the inventive thread is made between 0.8 to 1.2 times the pitch p of the thread.

The screw thread 400 has thread faces 420 extending away from the thread root 444 and terminate at the thread tip 442. The thread tip 442 forms a convex rounded transition between the thread surfaces 420 at the thread tip 442 being at least substantially convex. The rounded thread tips 442 are developed from a radius r1 forming the second radius of the inventive thread which is made substantially to 0.1 times the pitch p of the thread. The radius r1 is designed such that the rounded thread tips 442 are also symmetrical to the imaginary symmetry axis PA. That round thread tips 442 control and minimize advantageously shearing forces set up during cold forming of the complementary threads in the low ductility material.

Further, there are also rounded thread roots 444 that form a concave rounded transition between subsequent thread surfaces 420. The rounded thread roots 444 are developed from a radius r2 forming the third radius of the inventive thread which is made substantially to 0.08 times the pitch p of the thread. The radius r2 is designed such that the rounded thread roots 444 are also symmetrical to the imaginary symmetry axis PA.

It is clear, that the centers of the radii r1 and r2 are positioned on the symmetry axis of the thread tips 442 and the symmetry axis of the thread roots 444, respectively. The centers of the radii R defining the convex thread faces 420 are positioned such that there are fulfilled two conditions: first, in transition points from a thread tip 442 to a thread face 420 the tangent constructed on the circle having the radius R which defines the thread face 420 and the tangent constructed on the circle having the radius r1 which defines the thread tip 442 are substantially equal. Second, in transition points from a thread roots 444 to a thread face 420 the tangent constructed on the circle having the radius R which defines the thread face 420 and the tangent constructed on the circle having the radius r2 which defines the thread roots 444 are substantially equal. In Fig. 4, the radii R are drawn such that it is indicated that the centers of the radii R are farther away from the thread faces 420. Connecting the transition points at both ends of a thread face 420 by a line being secant of the thread face 420 then the center point of the radius R can be found on the symmetry axis of the secant.

Recapitulating Fig. 4, it can clearly be seen that transitions between the radii defining the thread tips 442, thread roots 444 and thread faces 420 of the inventive screw thread 400 is made such that the whole run of the thread profile is continuous. In other words, there are no sharp bends or breaks in the run of the thread profile. Thus, by introducing internal forces by the inventive thread forming screw or nut, respectively, into the respective mating component stress concentration in the mating material is avoided to the maximum possible extend. Moreover, the radius form of the thread tip and the convex thread face profile form has the facility for developing internal forces, during the self-tapping of the mating thread in the anchor material, that are predominately compressive. This feature minimizes the magnitude of any shear forces that can be present with other thread profile designs. Subsequently, the destructive influences of induced shear forces in creating chips; burrs; slivers and the eruption of layers in the magnesium alloy nut anchor are eliminated.

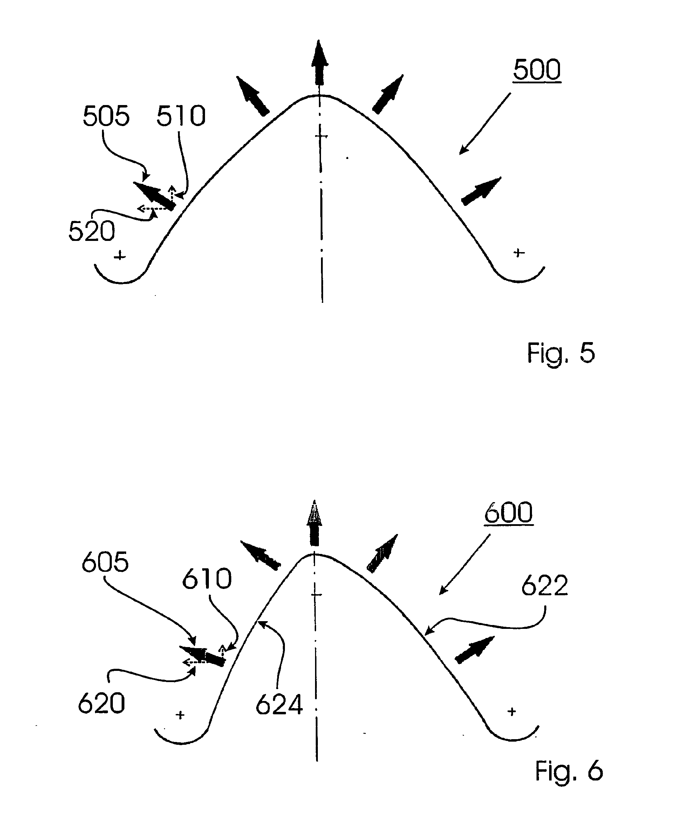

Fig. 5 is a schematic indicator of the direction of the forces that create the compression of the magnesium alloy material during the creation of the mating nut thread using self-tapping principles. It demonstrates the benefits that are achieved using the innovative profile construction of the present invention.

This diagram further illustrates the development of the radius thread profile that enables a smooth arcuate thread construction to be continuous along the length of the threaded screw body or screw shank, respectively. This continuous arcuate construction being advantageous in overcoming nut material damage that would occur with interrupted contact surfaces.

More specific, Fig.5 depicts one external thread 500 of the screw according to the first embodiment of the invention, which is used to cold form a mating thread in a component, as well as what are the forces acting on the material of the threads during the formation process which are shown as black arrows. For instance, a resultant force 505 acting upon the external and internal threads has a radial component 510 directed along a radius of the plain bore pilot hole formed in the component, and an axial component 520 directed along an axis of elongation of the screw. Following the curvature to the tip, the axial component 520 decreases and the compressing radius component 510 increases.

When the thread of Fig. 5 is screwed in a component comprised of a low ductility material, such as magnesium or the like, the above discussed and in Fig. 5 depicted forces will not adversely affect the structural integrity of the internal threads thus formed. Advantageously, galling, slivering, layer eruption and chipping of the component material is avoided. Moreover, no portions of the component material adjacent the bore pilot hole crumble or tear. Additionally, no slivers will form proximate the thread tips of the internal threads and thus, cannot break away. The structural integrity of the internal threads is not impaired and there is no interference with driving of the screw threads.

Furthermore, due to the continuous form of the thread profile, distribution of the occurring forces is continuous as well. Thus, stress fractures form proximate to the bases of the internal threads are avoided. The relatively increased magnitude of the radial component of the resultant force acting upon the internal threads also decreases the propensity of the threads to fracture and shear off of the component. The internal threads, therefore, have significantly enhanced load bearing potential and reusability.

Fig.6 is an illustration of a deviation that might occur in respect of the present invention as outlined. This deviation allows for the screw thread profile to be of a non-symmetrical form. However, it is clearly noted that the leading face of the profile is in accordance with all elements described in the present invention and that the trailing face is in a manner that provides a continuous arcuate form along the length of the threaded screw shank.

Fig. 6 in comparison to Fig. 5, there is an example for an asymmetric thread configuration according to the present invention. In Fig. 6 one external thread 600 of an embodiment of a screw is shown, wherein the convex trailing thread face 624 is much steeper then the convex leading thread face 622. Thus, as easily can be seen from the force diverting effect by means of the thread face configuration while the relatively magnitude of the radial component 610 of the resultant force 605 is reduced, the relatively magnitude of the axial component 620 of the resultant force 605 is increased. Thus, the axial component 620 acting upon the internal threads provides more pressure in direction of the bore pilot hole and screw, respectively. Hence, such a thread profile will be applicable in any application where higher clamping forces are needed and the ductility of the nut material allows it.

The usefulness of the teachings according to the invention is to relate the respective profile of internal and external proportions to elements that are defined in common terminology as a nut and bolt, respectively. Any and all assembly processes that utilize the concepts will benefit from the ability of the inventive fastener system to withstand higher axial applied forces than those of conventional systems that are constructed with a thread profile that is substantially of triangular form, all other factors being equal.

While a particular embodiment of the invention has been shown and described in detail, it will be obvious to those skilled in the art that changes and modifications of the present invention, in its various aspects, may be made without departing from the invention, some of such changes and modifications being matters of routine engineering or design and others being apparent only after study. As such the scope of the invention is defined by the appended claims.

## Claims

1. A thread, in particular for a thread-rolling or self-tapping screw (100) or nut, respectively, having a non-triangular thread profile (400) with leading thread faces (422) and trailing thread faces (424) wherein at least one of said leading thread faces (422) and trailing thread faces (424) is provided with a convex curvature having a first radius (R),
**characterized in that** the tip (442) of said non-triangular thread profile (400) has also a convex curvature with a second radius (r1) wherein the value of the first radius (R) is different from the value of the second radius (r1).

2. The thread according to claim 1,
wherein the first radius (R) is larger than the second radius (r1).

3. The thread according to claims 1 or 2,
wherein the transition from the at least one of the leading thread faces (422) and trailing thread faces (424) being provided with a convex curvature and the tip (442) of the non-triangular thread profile (400) is continuous.

4. The thread according to any of claims 1 to 3,
that the root (444) between two subsequent non-triangular thread profiles (400) has a concave curvature with a third radius (r2).

5. The thread according to claim 4,
wherein the value of the third radius (r2) is smaller than the value of the first radius (R) and preferably smaller than the value of the second radius (r1).

6. The thread according to claims 4 or 5,
wherein the transition from the at least one of the leading thread faces (422) and trailing thread faces (424) being provided with a convex curvature and the bottom (444) between two consequent non-triangular thread profiles (400) is continuous.

7. The thread according to any of claims 1 to 6,
wherein the leading thread faces (422) and the trailing thread faces (424) of a non-triangular thread profile (400) are shaped symmetrically to each other.

8. The thread according to any of claims 1 to 6,
wherein the leading thread faces (422) and trailing thread faces (424) of a non-triangular thread profiles (400) are asymmetrically to each other.

9. The thread according to any of claims 1 to 8,
wherein the pitch (p) of the thread is between 0.15 to 0.5 times the nominal diameter of the thread.

10. The thread according to any of claims 1 to 9,
wherein the first radius (R) of the thread profile (400) is between 0.8 to 1.2 times the pitch (p) of the thread.

11. The thread according to any of claims 1 to 10,
wherein the depth (TD) of the thread profile (400) is between 0.4 to 0.65 times the pitch (p) of the thread.

12. The thread according to any of claims 1 to 11,
wherein the second radius (r1) of the thread profiles (400) is defined by 0.1 times the pitch (p) of the thread.

13. The thread according to any of claims 1 to 12,
wherein the third radius (r2) of the thread profile (400) is defined by 0.08 times the pitch (p) of the thread.

14. A screw for a fastener system,
wherein the screw (100) includes a non-triangular external thread (130) being designed according to any of claims 1 to 13.

15. The screw according to claim 14,
wherein the screw (100) is a thread-rolling screw.

16. The screw according to claims 14 or 15,
wherein the external thread of said screw has a circular cross-section.

17. The screw according to any of claims 14 to 16,
wherein the external thread of said screw (100) has a non-circular, lobular cross-section (200).

18. The screw according to any of claims 14, to 17,
wherein the external thread of said screw (100) has a pilot section (145) at the point (140) of the screw (100).

19. The screw according to claim 18,
wherein the length of the pilot section (145) is defined by 2.0 times the pitch (p) of the thread of the screw (100).

20. A nut for a fastener system,
wherein the nut includes a non-triangular internal thread being designed according to anyone of claims 1 to 13.

21. The nut according to claim 20,
wherein the nut is a thread-rolling nut.

22. The nut according to claims 20 or 21,
wherein the internal thread of said nut has a circular cross-section.

## Patentansprüche

1. Gewinde, insbesondere für eine gewindefurchende oder selbstschneidende Schraube (100) bzw. Mutter, das ein nicht-dreieckiges Gewindeprofil (400) mit vorderen Gewindeflächen (422) und hinteren Gewindeflächen (424) aufweist, wobei wenigstens eine der vorderen Gewindeflächen (422) und hinteren Gewindeflächen (424) mit einer konvexen Krümmung versehen ist, die einen ersten Radius (R) aufweist,
**dadurch gekennzeichnet, dass**
die Spitze (442) des nicht-dreieckigen Gewindeprofils (400) ebenfalls eine konvexe Krümmung mit einem zweiten Radius (r1) aufweist, wobei der Wert des ersten Radius (R) verschieden ist vom Wert des zweiten Radius (r1).

2. Gewinde nach Anspruch 1,
wobei der erste Radius (R) größer ist als der zweite Radius (r1).

3. Gewinde nach einem der Ansprüche 1 oder 2,
wobei der Übergang zwischen der wenigstens einen der vorderen Gewindeflächen (422) und hinteren Gewindeflächen (424), die mit einer konvexen Krümmung versehen sind, und der Spitze (442) des nicht-dreieckigen Gewindeprofils (400) kontinuierlich ist.

4. Gewinde nach irgendeinem der Ansprüche 1 bis 3,
wobei der Fuß (444) zwischen zwei aufeinanderfolgenden nicht-dreieckigen Gewindeprofilen (400) eine konkave Krümmung mit einem dritten Radius (r2) aufweist.

5. Gewinde nach Anspruch 4,
wobei der Wert des dritten Radius (r2) kleiner ist als der Wert des ersten Radius (R) und vorzugsweise kleiner ist als der Wert des zweiten Radius (r1).

6. Gewinde nach Anspruch 4 oder 5,
wobei der Übergang zwischen der wenigstens einen der vorderen Gewindeflächen (422) und der hinteren Gewindeflächen (424), die mit einer konvexen Krümmung versehen sind, und dem Fuß (444) zwischen zwei aufeinanderfolgenden nicht-dreieckigen Gewindeprofilen (400) kontinuierlich ist.

7. Gewinde nach irgendeinem der Ansprüche 1 bis 6,
wobei die vorderen Gewindeflächen (422) und die hinteren Gewindeflächen (424) eines nicht-dreieckigen Gewindeprofils (400) symmetrisch zueinander geformt sind.

8. Gewinde nach irgendeinem der Ansprüche 1 bis 6,
wobei die vorderen Gewindeflächen (422) und die hinteren Gewindeflächen (424) eines nicht-dreieckigen Gewindeprofils (400) asymmetrisch zueinander geformt sind.

9. Gewinde nach irgendeinem der Ansprüche 1 bis 8,
wobei die Teilung (p) des Gewindes das 0,15-fache bis 0,5-fache des Nenndurchmessers des Gewindes beträgt.

10. Gewinde nach irgendeinem der Ansprüche 1 bis 9,
wobei der erste Radius (R) des Gewindeprofils (400) das 0,8-fache bis 1,2-fache der Teilung (p) des Gewindes beträgt.

11. Gewinde nach irgendeinem der Ansprüche 1 bis 10,
wobei die Tiefe (TD) des Gewindeprofils (400) das 0,4-fache bis 0,65-fache der Teilung (p) des Gewindes beträgt.

12. Gewinde nach irgendeinem der Ansprüche 1 bis 11,
wobei der zweite Radius (r1) der Gewindeprofile (400) durch das 0,1-fache der Teilung (p) des Gewindes definiert ist.

13. Gewinde nach irgendeinem der Ansprüche 1 bis 12,
wobei der dritte Radius (r2) des Gewindeprofils (400) durch das 0,08-fache der Teilung (p) des Gewindes definiert ist.

14. Schraube für ein Befestigungssystem,
wobei die Schraube (100) ein nicht-dreieckiges Außengewinde (130) enthält, das gemäß irgendeinem der Ansprüche 1 bis 13 gestartet ist.

15. Schraube nach Anspruch 14,
wobei die Schraube (100) eine gewindefurchende Schraube ist.

16. Schraube nach Anspruch 14 oder 15,
wobei das Außengewinde der Schraube einen kreisförmigen Querschnitt aufweist.

17. Schraube nach irgendeinem der Ansprüche 14 bis 16,
wobei das Außengewinde der Schraube (100) einen nicht-kreisförmigen, lappenförmigen Querschnitt (200) aufweist.

18. Schraube nach irgendeinem der Ansprüche 14 bis 17,
wobei das Außengewinde der Schraube (100) einen Zapfenabschnitt (145) an der Spitze (140) der Schraube (100) aufweist.

19. Schraube nach Anspruch 18,
wobei die Länge des Zapfenabschnitts (145) durch das 2,0-fache der Teilung (p) des Gewindes der Schraube (100) definiert ist.

20. Mutter für ein Befestigungssystem,
wobei die Mutter ein nicht-dreieckiges Innengewinde enthält, das gemäß irgendeinem der Ansprüche 1 bis 13 gestaltet ist.

21. Mutter nach Anspruch 20,
wobei die Mutter eine gewindefurchende Mutter ist.

22. Mutter nach Anspruch 20 oder 21,
wobei das Innengewinde der Mutter einen kreisförmigen Querschnitt aufweist.

## Revendications

1. Filet, en particulier pour une vis (100) à roulage de filets ou autotaraudeuse, ou respectivement un écrou, ayant un profil de filet non triangulaire (400) présentant des flancs avant (422) et des flancs arrière (424), dans lequel au moins l'un des flancs avant (422) et flancs arrière (424) a une courbure convexe ayant un premier rayon (R),
**caractérisé en ce que** le sommet (442) du profil de filet non triangulaire (400) a également une courbure convexe ayant un deuxième rayon (r1), la valeur du premier rayon (R) étant différente de la valeur du deuxième rayon (r1).

2. Filet selon la revendication 1, dans lequel le premier rayon (R) est plus grand que le deuxième rayon (r1).

3. Filet selon la revendication 1 ou la revendication 2, dans lequel la transition entre, d'une part, l'au moins un des flancs avant (422) et flancs arrière (424) ayant une courbure convexe, et, d'autre part, le sommet (442) du profil de filet non triangulaire (400), est continue.

4. Filet selon l'une quelconque des revendications 1 à 3, dans lequel la racine (444) entre deux profils de filet non triangulaires (400) successifs a une courbure concave ayant un troisième rayon (r2).

5. Filet selon la revendication 5, dans lequel la valeur du troisième rayon (r2) est inférieure à la valeur du premier rayon (R) et, de préférence, inférieure à la valeur du deuxième rayon (r1).

6. Filet selon la revendication 4 ou la revendication 5, dans lequel la transition entre, d'une part, l'au moins un des flancs avant (422) et flancs arrière (424) ayant une courbure convexe, et, d'autre part, le fond (444) entre deux profils de filet non triangulaires (400) consécutifs, est continue.

7. Filet selon l'une quelconque des revendications 1 à 6, dans lequel les flancs avant (422) et les flancs arrière (424) d'un profil de filet non triangulaire (400) sont conformés de façon à être mutuellement symétriques.

8. Filet selon l'une quelconque des revendications 1 à 6, dans lequel les flancs avant (422) et les flancs arrière (424) d'un profil de filet non triangulaire (400) sont conformés de façon à être mutuellement dissymétriques.

9. Filet selon l'une quelconque des revendications 1 à 8, dans lequel le pas (p) du filet représente entre 0,15 et 0,5 fois le diamètre nominal du filet.

10. Filet selon l'une quelconque des revendications 1 à 9, dans lequel le premier rayon (R) du profil de filet (400) représente entre 0,8 et 1,2 fois le pas (p) du filet.

11. Filet selon l'une quelconque des revendications 1 à 10, dans lequel la profondeur (TD) du profil de filet (400) représente entre 0,4 et 0,65 fois le pas (p) du filet.

12. Filet selon l'une quelconque des revendications 1 à 11, dans lequel le deuxième rayon (r1) du profil de filet (400) est défini comme étant de 0,1 fois le pas (p) du filet.

13. Filet selon l'une quelconque des revendications 1 à 12, dans lequel le troisième rayon (r2) du profil de filet (400) est défini comme étant de 0,08 fois le pas (p) du filet.

14. Vis pour un système de fixation, dans laquelle la vis (100) comprend un filet extérieur non triangulaire (130) conçu selon l'une quelconque des revendications 1 à 13.

15. Vis selon la revendication 14, dans laquelle la vis (100) est une vis à roulage de filets.

16. Vis selon la revendication 14 ou la revendication 15, dans laquelle le filet extérieur de la vis a une section droite circulaire.

17. Vis selon l'une quelconque des revendications 14 à 16, dans laquelle le filet extérieur de la vis (100) a une section droite non circulaire, à lobes (200).

18. Vis selon l'une quelconque des revendications 14 à 17, dans laquelle le filet extérieur de la vis (100) a un tronçon pilote (145) au point (140) de la vis (100).

19. Vis selon la revendication 18, dans laquelle la longueur du tronçon pilote (145) est définie comme étant de 2,0 fois le pas (p) du filet de la vis (100).

20. Ecrou pour un système de fixation, dans lequel l'écrou comprend un taraudage non triangulaire conçu selon l'une quelconque des revendications 1 à 13.

21. Ecrou selon la revendication 20, dans lequel l'écrou est un écrou à roulage de filets.

22. Ecrou selon la revendication 20 ou la revendication 21, dans lequel le taraudage de l'écrou a une section droite circulaire.
